# EUROPEAN PATENT APPLICATION

(11) **EP 2 216 565 A1**
(43) Date of publication of application: **11.08.2010**
(21) Application number: 09425039.6
(22) Date of filing: 05.02.2009
(51) Int. Cl.: F16H 19/04, F15B 15/06

(54) **Single-acting spring-return hydraulic actuator, for the reciprocating angular movement of a control shaft**

(71) Applicant: SERVOVALVE spa, 20010 Santo Stefano Ticino (MI) (IT)
(72) Inventor: The designation of the inventor has not yet been filed

(57) **Abstract**

The invention is a single acting hydraulic actuator with spring return, for the reciprocating angular displacement of a control shaft.

The aims of this invention are:
• to minimize the overall dimensions of the invention to solve problems of installation, placing the hydraulic cylinder and the spring pack on the same side of the central housing.
• to improve the efficiency of the hydraulic actuator thus far achieved through articulated coupling between the stems of the hydraulic cylinder and the spring pack and their related racks. The above-mentioned links enable large misalignments, thus avoiding the transmission of stress outside the axis of the rack's movement, and ensuring a more efficient, smooth, precise and durable operation.
• to improve the efficiency of the hydraulic actuator thus far achieved by decoupling the stems of the hydraulic cylinder and the stem of the spring pack, through implementation of two independent racks.
• to improve the efficiency of the hydraulic actuator thus far achieved through the implementation of special guides for the said racks that maximize the sliding surface
• to minimize the vibration transmitted to the invention by means of special design features adopted in the above mentioned rack guide.

## Description

The subject of this utility model is a single acting spring return hydraulic actuator for the reciprocating angular displacement of a control shaft to actuate a valve shaft with the maximum shaft rotation of 180 ° (normally equal to 90° ), in which either the hydraulic cylinder and the spring pack ensure the transmission of the movement by means of a rack and pinion kinematic system.

In this type of hydraulic actuators realised up to now, the hydraulic cylinder and the spring pack are assembled opposite each other on two opposite sides of the central housing of the actuator and are rigidly connected by a transmission shaft.

The aforementioned present design presents various drawbacks, and among them there are the following ones:
- a considerable overall dimension for the presence of the above-mentioned two elements considerably developed in length (cylinders and springs), which implies a degree of available space in the device's area of application and that often creates difficulties that are not always overcome during the installation.
- the rigid connection between spring and cylinder, which means that the lateral thrusts caused by the tensioned spring can reflect on the cylinder increasing friction and thus reducing the actuator efficiency.
- the strong influence of vibrations transmitted to the invention by the control shaft and/or by the structure integral with the hydraulic actuator.
   The main aims of the present invention are to eliminate the above mentioned drawbacks with regard to the hydraulic actuator of the prior state-of-the-art, realising a hydraulic actuator in which:

- the cylinder and spring pack are fitted in parallel and on the same side of the central housing, thereby making the device extremely compact, safe, with reduced overall dimension and easily installed even in cases when space is at a minimum.
- The stem of the cylinder and spring pack are uncoupled (not rigidly connected to one another) so as to realise an actuator of the said type which can allow a more efficient, controlled, precise and long lasting operation.
- Particular constructional foresight has been adopted in the realisation of the guide of the two independent racks so as to maximise the efficiency of the invention and minimise the influence of the vibrations transmitted to the invention itself.

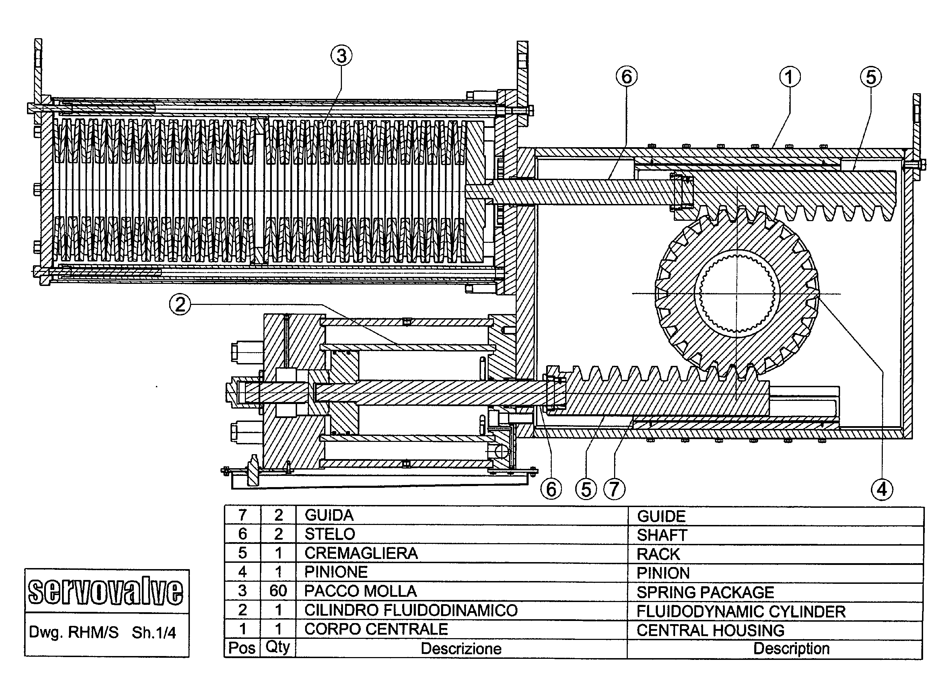

These and other purposes, which will eventually appear from the detailed description that follows, are achieved by the invention, which, with reference to the attached figure "FIG. 1 ", is characterized by the fact that the transformation of the linear movement into an a rotation is achieved by means of two independent and opposite racks (pos. 5), driving a central gear (pos. 4).

This solution allows the cylinder (pos. 2) and the spring pack (pos. 3) to be assembled on one side of a central body (pos. 1) and simultaneously making the guide of the two independent racks (pos. 5) from that of the spring pack stem (pos. 6) and of the hydraulic cylinder stem (Pos. 6).

These features comes out from a representative actuator illustrated in drawing "RHM/S-01" in which the only figure "FIG. 1" represents an axial section thereof. With reference to this figure, it has been illustrated with (pos. 1) actuator central housing, with (pos. 2) the hydraulic cylinder, and with (pos. 3) the spring pack, parallel cantilevered assembled on the central housing (pos. 1), and having independent stems (pos. 6).

The cylindrical gear (pos. 4) that controls the shaft that must be angularly ) displaced in one direction and reciprocating in the other one, is mounted in correspondence to the central housing (pos. 1).

The rotation of the gear is caused by two independent straight toothed racks (pos. 5) running within guides rigidly mounted inside the two side walls of the central housing (pos. 1). Both the hydraulic cylinder (pos. 2) and the spring pack (pos. 3) are connected to the two racks (pos. 5) by means of a device consisting of a ring and a ring nut such that the link between the stems (6) and the related racks (pos. 5) also allows large misalignments without the transmission of the forces being compromised or diminished by the friction that might occur due to deformation under stress of the said stems (pos. 6).

The racks (pos. 3) run on independent, flat and wide surface guides (7), which are specially designed to minimize the values of the specific pressure on the said surfaces and to minimize the influence of vibration to the invention.

## Claims

1. Single acting hydraulic actuator with spring return for the reciprocating angular displacement of a control shaft, in which either the hydraulic cylinder and the spring pack ensure the transmission of the movement of the said shaft by means of a rack and pinion kinematic system **characterized by** the fact that the cylinder and the spring pack are mounted in parallel on the same side of the central housing, making the device very compact, safe, very compact and of easy installation even in cases in which there is a lack of availability of space.

2. Hydraulic actuator in accordance with previous claim, **characterized by** the fact that the link between the cylinder and the spring pack stems and their related racks is made through an articulated link which includes a ring and a ring nut such that the link between the stems (6) and the related racks (pos. 5) also allows large misalignments without the transmission of the forces being compromised or diminished by the friction that might occur due to deformation under stress of the said stems (pos. 6).

3. Hydraulic actuator in accordance with the previous claim, **characterized by** the fact that the two racks, that transform the linear movement into a rotary movement, slide on independent, flat and wide surface guides, thus minimizing the specific pressure values on them.

4. Hydraulic actuator in accordance with the previous claim, **characterized by** the fact that the flat surfaces in which the two independent racks slide, are made through the coupling between the same racks and very rigid guides that enclose and constrain the racks on all their sides, maximizing their alignment and their guide, and minimizing the transmission of vibrations to the invention.

5. Hydraulic actuator in accordance with the previous claim, **characterized by** the fact that the interposition of material suitable to minimize friction on each side of the flat surfaces of the racks and their guides ensures maximum efficiency of the invention.
